# EUROPEAN PATENT APPLICATION

(11) **EP 4 343 166 A1**
(43) Date of publication of application: **27.03.2024**
(21) Application number: 22197289.6
(22) Date of filing: 23.09.2022
(51) Int. Cl.: F16D 55/2265, F16D 55/227, F16D 65/00

(54) **CALIPER GUIDE ASSEMBLY**

(71) Applicant: Meritor Heavy Vehicle Braking Systems (UK) Limited, Cwmbran, Gwent NP44 3XU (GB)
(72) Inventor: Cleary, Sean, Cwmbran, NP44 3XU (GB); Rhys, Watkins, Cwmbran, NP44 3XU (GB)
(74) Representative: Ayre, Nicola Unity

(57) **Abstract**

A caliper guide assembly for a heavy vehicle disc brake, the caliper guide assembly comprising a guide pin; a caliper defining a guide bore arranged to receive the guide pin and permit relative sliding thereof; a sleeve co-axially aligned with the guide pin, the sleeve having a first end secured to the guide pin, and a second end secured to the caliper; the sleeve comprising at least first and second wall portions at which the sleeve is configured to crease upon contraction of the sleeve along a longitudinal axis thereof; wherein the sleeve is contractable from an extended position, where the sleeve is not creased at any of the wall portions, to a first contracted position, where the sleeve is creased at the first wall portion, and the sleeve is not creased at the remaining wall portion or portions, and to an ultimate contracted position, where the sleeve is creased at both or all wall portions; and wherein the extended or contracted position of the sleeve depends upon relative axial displacement between the caliper and the guide pin.

## Description

### FIELD

The present teachings relate to a caliper guide assembly for a heavy vehicle disc brake, to a heavy vehicle disc brake, and to a method of production of a sleeve for a caliper guide assem bly.

### BACKGROUND

Disc brakes are commonly used for braking heavy vehicles such as trucks, buses and coaches.

Disc brakes conventionally comprise a brake carrier and a caliper. The brake carrier is arranged to carry brake pads either side of a rotor. The caliper is slidably mounted on the brake carrier by two or more guide assemblies, such that when the disc brake is actuated, the caliper is able to slide with respect with the brake carrier so that both brake pads are urged on to the rotor in a clamping action to effect braking.

A guide assembly typically comprises a guide pin along which along which the caliper can slide, and a bore disposed in the caliper for receiving the guide pin.

It is desirable for the wear status of brake pad friction material to be to be known, so that the brake pads can be replaced when worn in order to maintain safe operation of the disc brake. It is particularly desirable to have knowledge in advance of when the brake pads will need to be replaced, so that efficient servicing and replacement of the brake pads can be scheduled. Such knowledge can also improve efficiency by ensuring that full use is made of the brake pads, i.e. that the pads are only replaced when fully worn.

It is known to provide a wear-sensing arrangement for a disc brake. However, such wear-sensing arrangements can be costly and can restrict the design of other parts of the brake. Simpler wear sensing arrangements and corresponding indicators are known, but can be inaccessible without specialist equipment, so that the state of wear of the brake pads can only be determined during servicing of the vehicle. A driver of the vehicle, for example, may not be able to determine the state of wear of the brake pads when in a remote location, i.e. away from a workshop. In particular, it can be difficult to determine how far in to pad life a disc brake is without removing the vehicle wheels.

The present teachings seek to overcome, or at least mitigate the problems of the prior art.

### SUMMARY

An aspect of the teachings provides a caliper guide assembly for a heavy vehicle disc brake, the caliper guide assembly comprising a guide pin; a caliper defining a guide bore arranged to receive the guide pin and permit relative sliding thereof; a sleeve co-axially aligned with the guide pin, the sleeve having a first end secured to the guide pin, and a second end secured to the caliper; the sleeve comprising at least first and second wall portions at which the sleeve is configured to crease upon contraction of the sleeve along a longitudinal axis thereof; wherein the sleeve is contractable from an extended position, where the sleeve is not creased at any of the wall portions, to a first contracted position, where the sleeve is creased at the first wall portion, and the sleeve is not creased at the remaining wall portion or portions, and to an ultimate contracted position, where the sleeve is creased at both or all wall portions; and wherein the extended or contracted position of the sleeve depends upon relative axial displacement between the caliper and the guide pin.

The sleeve condition provides an easily visible indication of the state of wear of the brake pads of the disc brake. As the sleeve position depends upon the relative axial displacement between the caliper and the guide pin, observation of the sleeve position provides an indication of this relative axial displacement. As the relative axial displacement of the caliper and the guide pin depends on the state of wear of the brake pads, the state of wear of the brake pads can be determined from the sleeve position. Advantageously, disassembly of the brake is not required in order to determine the brake pad wear status. No specialist equipment nor knowledge is required.

Using a simple sleeve to provide such information avoids the need for including additional components in the brake, so avoiding increased complexity and expense.

Providing two or more contracted positions of the sleeve provides more detailed information of the cumulative state of wear of the brake pads than in the prior art, where it may be indicated only that the brake pads are worn and should be replaced, without any advance indication of the state of wear.

In exemplary embodiments, the sleeve comprises at least first, second and third wall portions at which the sleeve is configured to crease upon contraction of the sleeve along the longitudinal axis; wherein the sleeve is adjustable in length along the longitudinal axis between the extended position and at least three contracted positions; and wherein at the first contracted position, the sleeve is creased at the first wall portion, and the sleeve is not creased at the remaining wall portion or portions; at the second contracted position, the sleeve is creased at the first wall portion and at the second wall portion and the sleeve is not creased at the remaining wall portion or portions; and at the ultimate contracted position, the sleeve is creased at all wall portions.

Advantageously, further contracted positions are provided, so that increased information of the state of pad wear is provided.

In exemplary embodiments, the first wall portion is proximal to one of the sleeve first end and the sleeve second end, wherein the ultimate wall portion is proximal to the other of the sleeve second end and the sleeve first end, and wherein the second wall portion is located between the first wall portion and any further wall portions along the longitudinal axis.

The sleeve contracts in sequence, starting at the outboard or inboard end as required. Cumulative wear leads to cumulative contraction of the sleeve, making it easier to determine the state of pad wear.

In exemplary embodiments, each wall portion has a relative wall thickness configured to provide higher or lower resistance to creasing upon contraction of the sleeve in relation to the remaining wall portions.

A simple and effective method of controlling the points at which creasing takes place is provided, in order to provide cumulative indication of wear.

In exemplary embodiments, the first wall portion has the lowest relative wall thickness, such that the first wall portion is configured to provide the lowest resistance to creasing upon contraction of the sleeve, and the ultimate wall portion has the highest relative wall thickness, such that the ultimate wall portion is configured to provide the highest resistance to creasing upon contraction of the sleeve.

Sequential creasing of the sleeve is provided, for improved ease of wear indication.

In exemplary embodiments, the sleeve wall thickness gradually increases from the first wall portion to the ultimate wall portion.

In exemplary embodiments, the sleeve wall thickness increases incrementally from the first wall portion to the ultimate wall portion.

Different configurations of the sleeve suit different applications or sleeve materials.

In exemplary embodiments, the first wall portion is sized to at least partially fit radially within the adjacent wall portion when the sleeve is in a contracted position.

In exemplary embodiments, the first wall portion is sized to fit radially within the adjacent wall portion when the sleeve is in a contracted position.

In exemplary embodiments, the sleeve is telescopic, such that adjacent wall portions are configured to at least partially fit radially within one another when the sleeve is in a contracted position.

In exemplary embodiments, the sleeve is telescopic, such that adjacent wall portions are configured to fit radially within one another when the sleeve is in a contracted position.

Advantageously, the telescopic nature of the sleeve improves the ease of readability of the state of wear. As each wall portion creases inside the next, it is easy for the viewer to determine the contracted position of the sleeve, and so indication of the state of wear is improved.

In exemplary embodiments, each wall portion comprises a visual identification feature.

Identification of each wall portion allows an observer to distinguish each wall portion from the others, and so determine the contracted position of the sleeve in order to determine the brake wear status.

In exemplary embodiments, the visual identification feature is a percentage correlating to a state of wear of the brake pads.

Where the visual identification feature is a percentage, the observer can easily determine the brake pad wear status, and so gauge the need for brake pad replacement.

In exemplary embodiments, the visual identification feature is a colour.

Alternatively, or additionally, a colour-coding system may be used, to provide a visual indicator that does not rely on understanding of a particular numbering system so can be universally understood.

In exemplary embodiments, the sleeve is resilient.

The resilient nature of the sleeve facilitates contraction to the contracted positions as the relative position of the guide pin and the caliper changes.

In exemplary embodiments, the sleeve is resiliently biased towards the ultimate contracted position.

The sleeve thus reacts to a change in the relative position of the caliper and the guide pin as desired, i.e. moving towards the next contracted position, and so provides the required indication of the state of wear of the brake pads.

In exemplary embodiments, the sleeve is of rubber.

In exemplary embodiments, the sleeve is of silicone rubber.

Rubber, in particular silicone rubber, is a suitable material that provides resilience and sealing, and allows moulding of the sleeve.

In exemplary embodiments, the sleeve is sealingly secured about the periphery of the guide pin.

In exemplary embodiments, the sleeve is sealingly secured to the caliper so as to seal an open end of the guide bore.

In exemplary embodiments, the sleeve first end is received within a corresponding groove defined by the guide pin.

The sleeve is thus able to act as an excluder, to inhibit the entry of e.g. dust into the guide bore. Advantageously, a simple visual indication of brake pad wear is provided without the need for an additional component.

There is also provided a heavy vehicle disc brake comprising a caliper guide assembly as set out above.

There is further provided a sleeve for a caliper guide assembly, the sleeve comprising a first end securable to a guide pin, and a second end securable to a caliper; and at least first and second wall portions at which the sleeve is configured to crease upon contraction of the sleeve along a longitudinal axis thereof. The sleeve is contractable from an extended position, where the sleeve is not creased at any of the wall portions, to a first contracted position, where the sleeve is creased at the first wall portion, and the sleeve is not creased at the remaining wall portion or portions, and to an ultimate contracted position, where the sleeve is creased at both or all wall portions.

The sleeve condition provides an easily visible indication of the state of wear of the brake pads of a disc brake when the sleeve is secured to a guide pin and to a caliper. As the sleeve position depends upon the relative axial displacement between the caliper and the guide pin, observation of the sleeve position provides an indication of this relative axial displacement. As the relative axial displacement of the caliper and the guide pin depends on the state of wear of the brake pads, the state of wear of the brake pads can be determined from the sleeve position. Advantageously, disassembly of the brake is not required in order to determine the brake pad wear status. No specialist equipment nor knowledge is required.

Using a simple sleeve to provide such information avoids the need for including additional components in the brake, so avoiding increased complexity and expense.

Providing two or more contracted positions of the sleeve provides more detailed information of the cumulative state of wear of the brake pads than in the prior art, where it may be indicated only that the brake pads are worn and should be replaced, without any advance indication of the state of wear.

There is yet further provided a method of production of a sleeve as set out above, the method including the step of moulding the sleeve according in an ultimate contracted position, where the sleeve is creased at both or all wall portions.

Moulding the sleeve in the ultimate or fully contracted position facilitates the contraction of the sleeve upon relative movement of the guide pin and the caliper towards one another, i.e. as brake pad wear occurs.

### BRIEF DESCRIPTION OF THE DRAWINGS

Embodiments will now be described with reference to the accompanying drawings, in which:

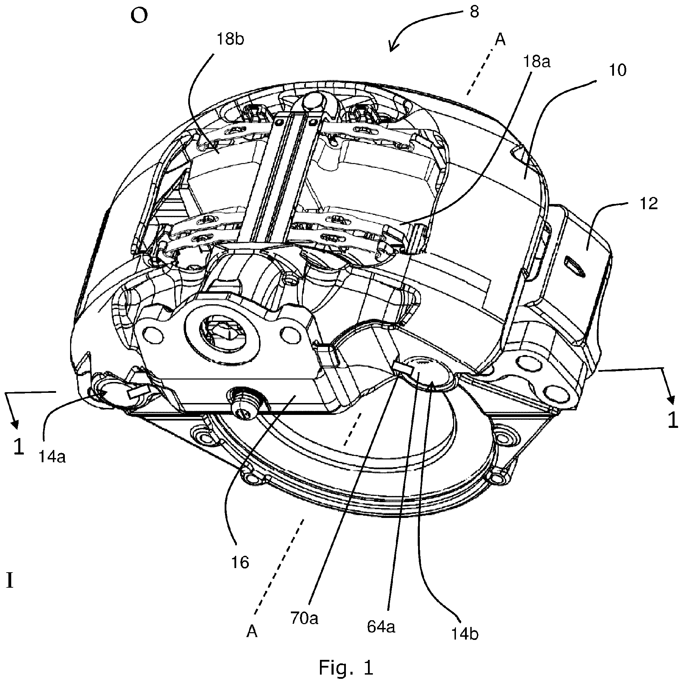

Figure 1 is an isometric view of a heavy vehicle disc brake according to an aspect of the teachings;
Figure 2 is a partial cross-sectional view through the heavy vehicle disc brake of Figure 1 on the plane 1-1, showing a caliper guide assembly according to an aspect of the teachings;
Figure 3 is a partial cross-sectional view through a caliper guide assembly in a first state according to an aspect of the teachings;
Figure 4 is a partial cross-sectional view of the guide assembly of Figure 3 in a second state;
Figure 5 is a partial isometric view of the guide assembly of Figure 3 in said second state;
Figure 6 is a partial cross-sectional view of the guide assembly of Figure 3 in a third state ;
Figure 7 is a partial isometric view of the guide assembly of Figure 3 in said third state.

### DETAILED DESCRIPTION OF EMBODIMENT(S)

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

A disc brake 8 comprises a caliper 10 slidably mounted with respect to a brake carrier 12 by two guide assemblies 14a and 14b. The caliper 10 has a housing 16. The housing 16 is typically formed of cast iron or steel. The carrier 12 is typically formed from cast iron or steel.

The brake carrier 12 carries an inboard brake pad 18a and an outboard brake pad 18b. A rotor (not shown), rotatable about an axis A-A, is positioned between the brake pads 18a, 18b. An actuator (not shown) is provided to move the inboard brake pad 18a into frictional contact with the rotor via an actuation mechanism housed within the caliper housing 16. When the inboard brake pad 18a is actuated towards and comes into contact with the rotor, the caliper 10 is caused to slide inboard along the first and second caliper guide assemblies 14a, 14b.

As the caliper 10 slides inboard, the caliper 10 moves the outboard brake pad 18b towards the rotor. As the outboard brake pad 18b comes into contact with the rotor, the rotor becomes clamped between the inboard and outboard brake pads 18a, 18b, such that the rotation of the rotor is frictionally inhibited and braking occurs.

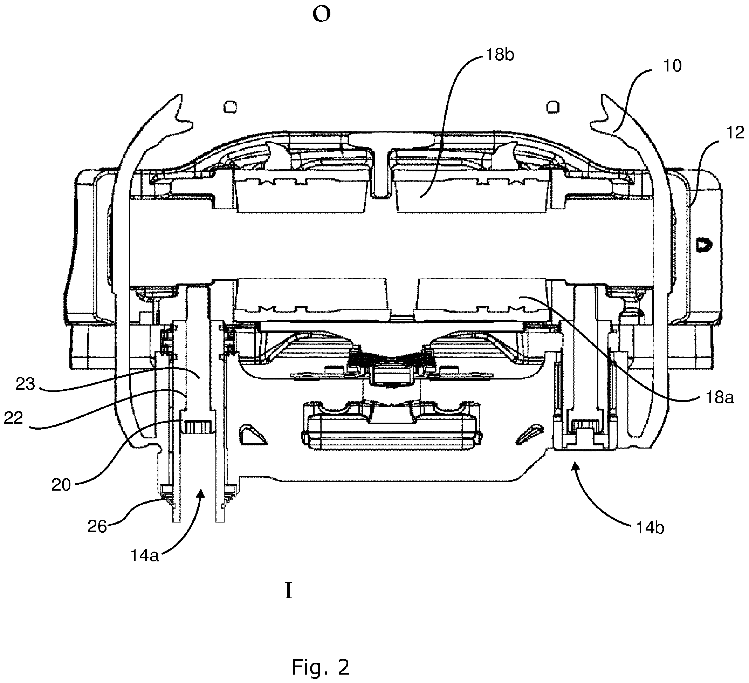

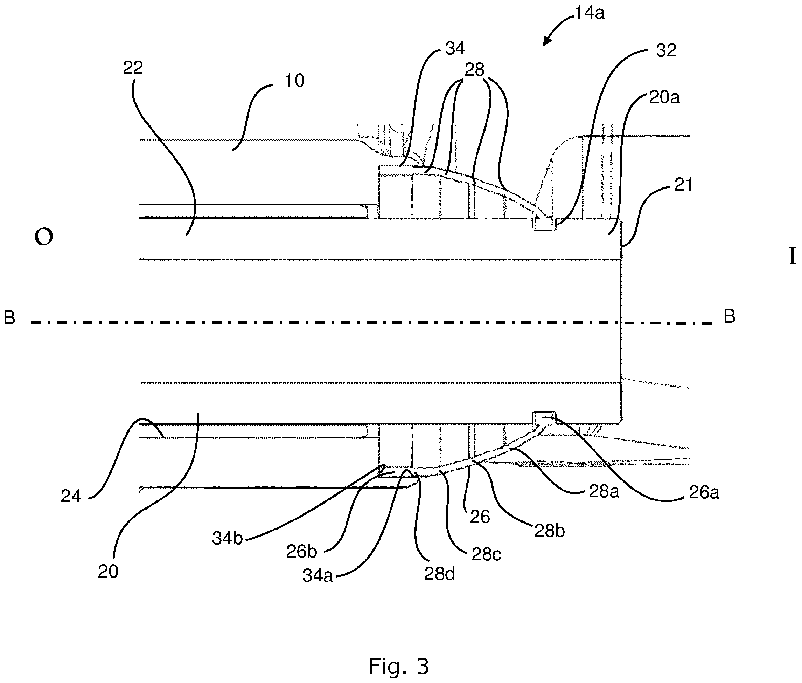

With reference to Figures 2 and 3, the guide assemblies 14a, 14b are shown in further detail. Figure 3 shows one guide assembly 14a. However, the relevant features described herein are also included in the remaining guide assembly 14b.

The guide assembly 14a has a guide pin 20 secured to the carrier 12. In this embodiment, the guide pin 20 is of the type having a guide pin sleeve 22 secured to the carrier 12 by an inner bolt 23.

In alternative embodiments, the guide pin is of some other type. For example, in one embodiment, the guide pin is monolithic.

In this embodiment, the outer cross-section of the guide pin 20 is circular. In alternative embodiments, the guide pin is of some other suitable outer cross section, e.g. polygonal.

The guide pin 20 is received in a bore 24 defined by the caliper 10. As set out above, the caliper 10 is slidably supported by the guide pin 20, such that the caliper 10 is slidable in the inboard and outboard directions in relation to the carrier 12.

The guide pin 22 defines a longitudinal axis B-B. The guide assembly 14a includes a sleeve 26. The sleeve 26 is arranged about the guide pin 20 coaxial to the guide pin 20, i.e. the guide pin 20 and the sleeve 26 share the longitudinal axis B-B. The sleeve 26 has a first, inboard, end 26a secured to the guide pin 20, and a second, outboard, end 26b secured to the caliper 10. The first and second ends 26a, 26b oppose one other along the longitudinal axis B-B of the sleeve 26. The sleeve 26 is contractable and extendable along the longitudinal axis B-B.

As an end 26a, 26b of the sleeve 26 is secured to each of the caliper 10 and the guide pin 20, relative movement of the caliper 10 and the guide pin 20 affects the state of the sleeve 26, i.e. causes contraction and/or extension of the sleeve 26.

The relative position of the caliper 10 and the guide pin 20 when the disc brake 8 is in a particular state of application (i.e. applied or released) changes depending on the state of wear of the brake pads 18a, 18b. As this is the case, the state of contraction or extension of the sleeve 26 can be used as an indication of the combined state of wear of the brake pads 18a, 18b.

The sleeve 26 has a number of wall portions 28 at which the sleeve 26 forms a radial crease (i.e. in a plane substantially 90° to the longitudinal axis B-B) upon contraction of the sleeve 26 along the longitudinal axis B-B. A first wall portion 28a is located proximal the inboard end 26a of the sleeve 26. An ultimate wall portion 28d is located proximal the outboard end 26b of the sleeve 26. In this embodiment, the sleeve 26 has two further wall portions: a second wall portion 28b and a third wall portion 28c, between the first wall portion 28a and the ultimate wall portion 28d.

The sleeve 26 is shown in Figure 3 in an extended position, where no creasing of the sleeve 26 has taken place. When the brake 8 is in a released position, i.e. the brake is not applied, and when the brake pads 18a and 18b are not worn, i.e. where the brake pads 18a, 18b are in a state of zero wear, the sleeve 26 is in the extended position shown. As the brake pads 18a, 18b become worn through repeated application of the disc brake 8, brake pad wear is accounted for by an adjuster mechanism. The caliper 10 is brought by this means inboard in relation to the carrier 12, such that the first and second ends 26a, 26b of the sleeve 26 are brought closer together. The sleeve 26 is thus contracted. As the sleeve 26 contracts, the sleeve 26 creases at the wall portions 28. A viewer is able to use the creasing of the wall portions 28 to determine the state of wear of the brake pads 18a, 18b.

In order to provide a useful indication of brake wear, the sleeve 26 is creased in sequence. That is, the sleeve 26 is creased at consecutive wall portions 28 as increased wear of the brake pads 18a, 18b takes place and the sleeve 26 thus becomes more contracted. The sleeve 26 has an extended position (i.e. that shown in in Figure 3), and two or more consecutive contracted positions, where each consecutive contracted position gives an indication of a different state of wear of the brake pads 18a, 18b.

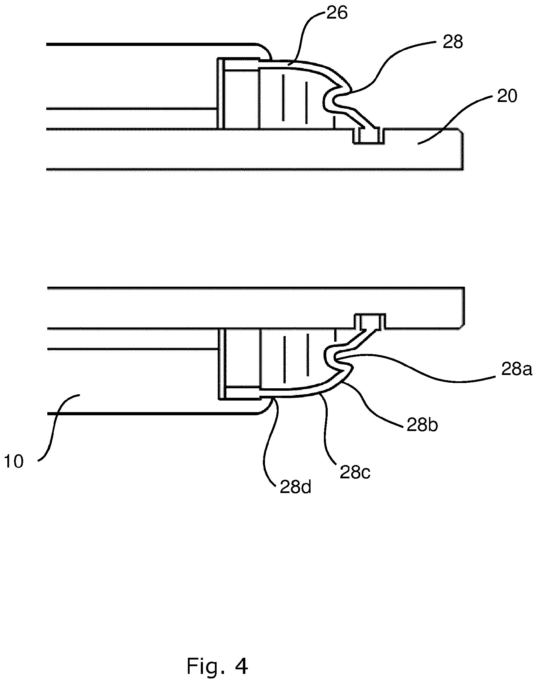

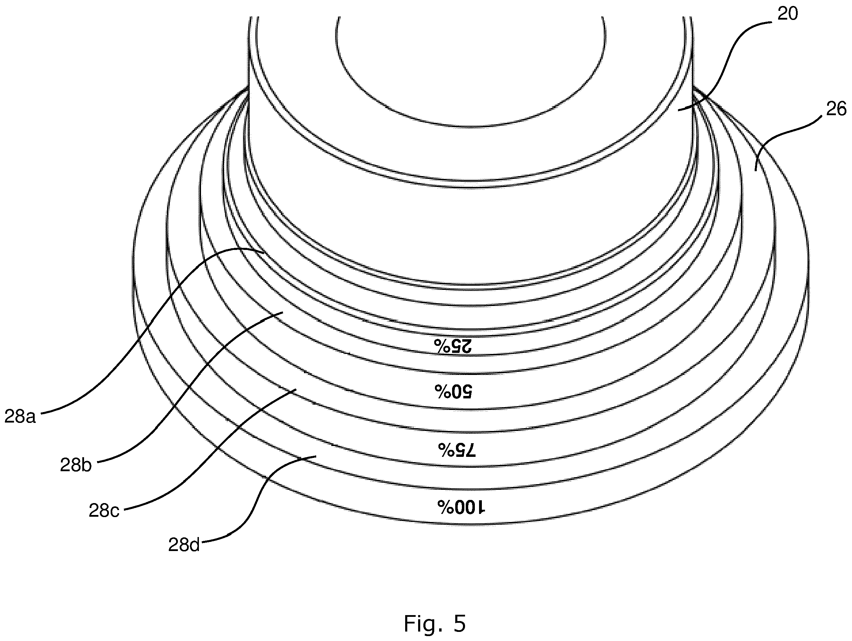

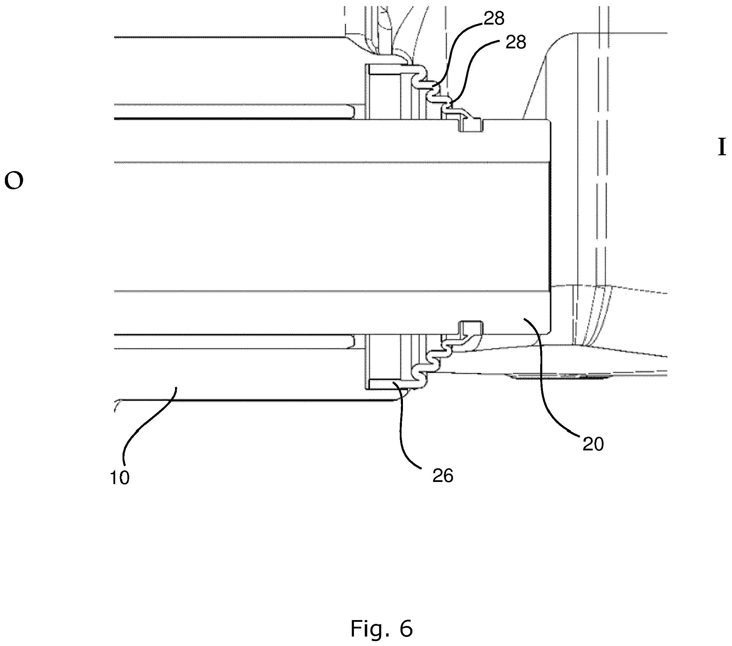

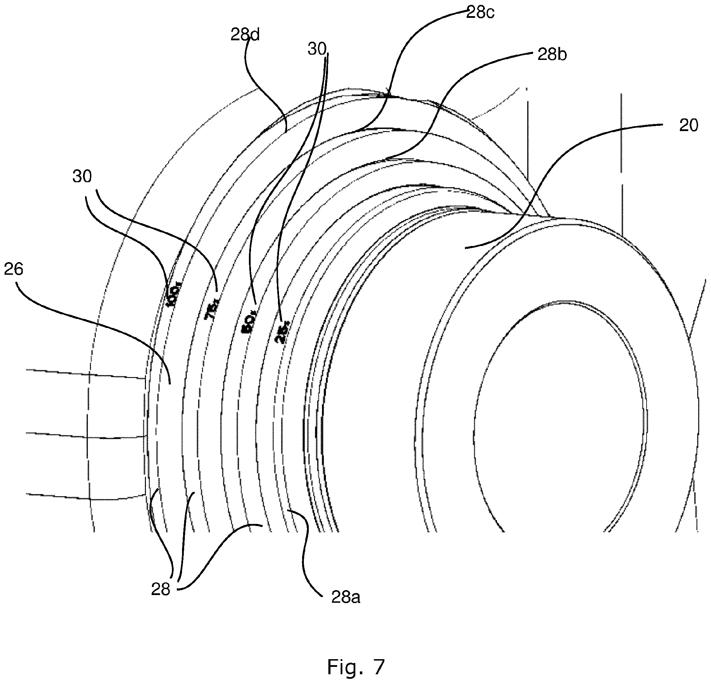

In this embodiment, the sleeve 26 has a first contracted position, shown in Figures 4 and 5, where the sleeve 26 is creased only at the first wall portion 28a and the sleeve 26 remains uncreased at the remaining wall portions 28b, 28c, 28d. The sleeve 26 has an ultimate or fully contracted position, shown in Figures 6 and 7, indicating the greatest state of wear of the brake pads 18a, 18b, at which the sleeve 26 is creased at all of the wall portions 28.

The sleeve 26 of this embodiment has two interim contracted positions. In a second contracted position (not shown), the sleeve 26 is creased at the first and second wall portions 28a, 28b, and is uncreased at the third and ultimate wall portions 28c, 28d. In a third contracted position (not shown), the sleeve 26 is creased at the first, second and third wall portions 28a, 28b, 28c, and is uncreased at the ultimate wall portion 28d. In an alternative embodiment where the sleeve has an alternative number of wall portions, the sleeve 26 has a corresponding alternative number of interim contracted positions.

Due to the clearly visible indication of whether or not the sleeve 26 is contracted, i.e. the wall portions 28 at which the sleeve 26 becomes creased being in a particular contracted position, a viewer can easily determine the state of wear of the brake pads 18a, 18b. Due to the positioning of the sleeve 26 external to and inboard of the caliper housing 16, this indication can be gained without the need for disassembly of the disc brake 8 or removal of a vehicle wheel. The sleeve 26 having multiple contracted positions as well as an extended position allows an interim state of wear of the brake pads 18a, 18b to be indicated, so that an indication of the remaining life in the brake pads 18a, 18b is given and servicing or brake pad replacement can be planned in advance, leading to improved efficiency and increasing the likelihood of the full life of the brake pad being used.

In this embodiment, the sleeve 26 is substantially circular. In alternative embodiments, the sleeve is of some other suitable shape, e.g. polygonal.

The sequence in which contraction of the sleeve 26 occurs as the brake pads 18a, 18b are worn, i.e. the sequence in which the wall portions 28 are creased upon contraction of the sleeve 26, is in this embodiment controlled by variation in wall thickness of the sleeve 26. Wall thickness of the sleeve 26 is indicated at x in Figure 3.

Where the wall thickness x is greater, the corresponding wall portions 28 have greater resistance to creasing, so are the later or last to crease. Where the wall portion 28 has a relatively low wall thickness x, lower resistance to creasing is provided, so that the sleeve 26 is configured to crease at such wall portions before creasing at those wall portions 28 with higher wall thickness x and so higher resistance to creasing.

Creasing of the sleeve 26 at the wall portions 28 occurs first where there is a minimum wall thickness. In this embodiment, the wall portion 28a proximal the inboard end 26a of the sleeve 26 has a minimum wall thickness x1. This minimum wall thickness x1 causes the first wall portion 28a to be the first to crease upon contraction of the sleeve 26.

The wall thickness x of the sleeve 26 increases from the inboard, first end 26a of the sleeve toward the outboard, second end 26b of the sleeve 26. The wall thickness x2 at the second wall portion 28b adjacent to and outboard of the first wall portion 28a is thicker than the wall thickness x1, and so on. The sleeve 26 is thus arranged to contract by creasing firstly at the first wall portion 28a, then at the second wall portion 28b, then at the third wall portion 28c, and finally at the ultimate wall portion 28d.

In this embodiment, the minimum wall thickness x1 is substantially 1mm. In this embodiment, the maximum wall thickness x4 is substantially 2mm. The wall thickness increases between the minimum wall thickness x1 and the maximum wall thickness x4.

In an alternative embodiment, the maximum wall thickness x4 of the sleeve is substantially 3mm. In one embodiment, the minimum wall thickness x1 is substantially 50% of the maximum wall thickness x4. In one such embodiment, the wall thickness gradually increases in a linear fashion from the minimum wall thickness x1 to the maximum wall thickness x4. In one such embodiment, the increase in wall thickness from the minimum wall thickness x1 to the maximum wall thickness x4 is incremental, or stepped, with a discrete increase in wall thickness at each wall portion 28.

In an alternative embodiment where the sleeve 26 has more or fewer wall portions, the sleeve 26 has more or fewer different wall thicknesses, corresponding to the number of wall portions.

In an alternative embodiment the sleeve 26 creases at the outboard end of the sleeve before creasing at the inboard end of the sleeve. In an embodiment, the wall thickness is arranged correspondingly, i.e. so that the wall thickness is less at the outboard end of the sleeve than at the inboard end of the sleeve.

As shown in Figures 6 and 7, where the sleeve 26 is in the ultimate contracted position, the sleeve 26 is telescopic. The wall portions 28 increase in diameter or cross-sectional size from (in this embodiment) the inboard end of the sleeve 26 towards the outboard end of the sleeve 26, such that adjacent wall portions 28 fit inside one another as the sleeve 26 is contracted. The telescopic nature of the sleeve 26 improves the ease of readability of the state of wear. As each wall portion 28 creases inside the next, it is easy for the viewer to determine the contracted position of the sleeve 26. That is, it would be clear to a viewer if the sleeve 26 is in the first contracted position, where the remaining wall portions are uncreased, or in the ultimate contracted position, where each of the wall portions 28 is creased and so folded into the next or adjacent wall portion 28.

In this embodiment, where each wall portion 28 is circular, adjacent wall portions 28 are of increasing diameter from the inboard end of the sleeve 26 to the outboard end of the sleeve 26. In alternative embodiments where the sleeve is of some other shape, e.g. square, adjacent wall portions are of the same shape, in the same orientation, but of different sizes, to allow telescoping of the sleeve 26.

Each of the wall portions 28 has an associated identification feature 30. Each identification feature 30 serves to distinguish the associated wall portion 28 from the remaining wall portions 28.

In this embodiment, as shown in Figure 7, the identification features 30 are in the form of percentages, where each percentage is an indication of the state of wear of the brake pads 18a, 18b. The first wall portion 28a has the associated identification feature 30 of 25%. When the sleeve 26 is in the first contracted position, it can be seen that the wall portion 28a is creased, and that the identification feature 30 associated with this wall portion 28a is 25%. A state of brake pad wear of 25% is thus indicated to the viewer.

The wall portion 28b has the associated identification feature 30 of 50%. The adjacent wall portion 28c has the associated identification feature 30 of 75%. The ultimate wall portion 28d has the associated identification feature 30 of 100%. In this embodiment, each indication feature is moulded with the sleeve. In an alternative embodiment the indication feature is printed on the sleeve, or is moulded and printed on the sleeve.

In the ultimate contracted position shown in Figure 7, it can be seen that the sleeve 26 is creased at all of the wall portions 28, so that it will be clear to the viewer that the brake pads 18a, 18b are 100% worn, and that replacement of the brake pads 18a, 18b should take place.

In alternative embodiments, some other type of identification feature is provided. For example, in some embodiments, the identification feature is of some other type of number, or is a written system including letters or words. In alternative embodiments, the identification feature is a colour system, e.g. where the first wall portion is associated with an identification feature of the colour green, indicating that the brake pads are relatively unworn, and the ultimate wall portion is associated with an identification feature of the colour red, indicating that the brake pads are fully worn and should be replaced.

In this embodiment, the sleeve 26 is resilient. In this embodiment, the sleeve 26 is resiliently biased towards the ultimate contracted position, i.e. that shown is Figures 6 and 7. The sleeve 26 being resiliently biased towards the contracted position means that the sleeve 26 is inclined to crease, so that creasing of the sleeve 26 to a contracted position will occur as the brake pads 18a, 18b become worn and the relative position of the caliper 10 and the carrier 12 changes. When the brake pads 18a, 18b are new and thus unworn, the sleeve 26 is extended to the extended position shown in Figure 3 due to the ends 26a, 26b of the sleeve 26 being secured to the guide pin 20 and the caliper 10 respectively.

In this embodiment, the sleeve 26 is moulded, and is formed of platinum cured silicone rubber. Each wall portion 28 is in the form of a preformed crease, created when the sleeve 26 is moulded. Such a preformed crease is a simple and effective means of controlling contraction of the sleeve 26 into predetermined contracted positions, thus simplifying pad wear indication.

In alternative embodiments, the sleeve is of some other suitable type of silicone rubber, or some other suitable rubber, or of some other suitable type of mouldable material. In an alternative embodiment, the sleeve is of some other suitable elastomer.

The sleeve 26 is in this embodiment moulded in the ultimate contracted position. Advantageously, this means that the sleeve 26 is resiliently biased towards returning to the ultimate contracted position, so that creasing of the sleeve 26 at the wall portions 28 will take place as soon as the relative position of the caliper 10 and the guide pin 20 allows the sleeve to contract.

With reference now to Figure 3, the sleeve 26 of this embodiment encircles the guide pin 20, and is secured to the guide pin 20 and to the caliper 10. In this embodiment, the sleeve 26 is secured to the radial outer wall of the guide pin sleeve 22 towards a free end 20a of the guide pin 20. In this embodiment, part of the free end 20a of the guide pin 20 extends beyond the sleeve 26 in the inboard direction. In an alternative embodiment, the first end 26a of the sleeve 26 is secured to the guide pin 20 at the free end 20a, i.e. where the radial surface of the guide pin sleeve 22 meets the axial end surface 21 of the guide pin sleeve 22.

The guide pin sleeve 22 defines a circumferential groove 32 in which the sleeve first end 26a is received. In this embodiment, the sleeve first end 26a is in the form of an annulus received within the groove 32. In one embodiment, the sleeve first end includes an annular rigid insert for attachment to the guide pin, e.g. of some suitable metallic material.

In this embodiment, the sleeve first end 26a is sealed to the periphery of the guide pin sleeve 20. The sleeve second end 26b is sealed to the caliper 10. The sleeve ends 26a, 26b being sealed to the guide pin 20 and the caliper 10 inhibits the entry of dust and dirt into the guide bore 24. That is, the sleeve 26 performs the job of a guide assembly excluder as well as providing an indication of brake pad wear, advantageously avoiding the need for an additional component. Including an excluder in the guide assembly removes the need for an end cap.

The caliper 10 defines an annular recess 34 at the mouth of the guide bore 24 and with a diameter larger than that of the guide bore 24, in which the sleeve second end 26b is received. The sleeve second end 26b is sealed to the recess 34. In this embodiment, the sleeve second end 26b is sealed to a side wall 34a of the recess 34. In an alternative embodiment, the sleeve second end 26b is sealed to an end wall 34b of the recess 34.

In an alternative embodiment, the sleeve second end includes an annulus of rigid material, e.g. metallic material, that is pressed to the caliper 10 to secure the sleeve second end to the caliper.

The sleeve 26 provides a simple and easily read means of pad wear indication without the need for disassembly of the vehicle or specialist equipment. The sleeve can be retro-fitted to existing disc brake assemblies, and is easily reusable and replaceable. Upon fitting of replacement unworn brake pads, the sleeve is returned to the extended position due to the repositioning of the caliper and the guide pin.

In contrast to the prior art, the sleeve provides progressive wear indication, with the state of pad wear provided at intervals between the unworn and the fully worn states. An advance indication of when pad replacement is required is thus given without the need for timeconsuming disassembly and brake pad inspection.

The sleeve allows inspection of brake pad wear in a remote area, i.e. away from any workshop. Advantageously, the sleeve provides an indication of when closer inspection of brake pads is required. For example, when closer inspection of the brake pads will involve taking the vehicle for servicing in a workshop, the sleeve can be used to provide an indication to a driver in a remote location of whether or not such servicing should be planned.

The sleeve is suitable for use with any sliding caliper disc brake.

## Claims

1. A caliper guide assembly for a heavy vehicle disc brake, the caliper guide assembly comprising:
a guide pin;
a caliper defining a guide bore arranged to receive the guide pin and permit relative sliding thereof;
a sleeve co-axially aligned with the guide pin, the sleeve having a first end secured to the guide pin, and a second end secured to the caliper;
the sleeve comprising at least first and second wall portions at which the sleeve is configured to crease upon contraction of the sleeve along a longitudinal axis thereof;
wherein the sleeve is contractable from an extended position, where the sleeve is not creased at any of the wall portions, to a first contracted position, where the sleeve is creased at the first wall portion, and the sleeve is not creased at the remaining wall portion or portions, and to an ultimate contracted position, where the sleeve is creased at both or all wall portions; and
wherein the extended or contracted position of the sleeve depends upon relative axial displacement between the caliper and the guide pin.

2. A caliper guide assembly according to claim 1, wherein the sleeve comprises at least first, second and third wall portions at which the sleeve is configured to crease upon contraction of the sleeve along the longitudinal axis; wherein the sleeve is adjustable in length along the longitudinal axis between the extended position and at least three contracted positions; and wherein at the first contracted position, the sleeve is creased at the first wall portion, and the sleeve is not creased at the remaining wall portion or portions; at the second contracted position, the sleeve is creased at the first wall portion and at the second wall portion and the sleeve is not creased at the remaining wall portion or portions; and at the ultimate contracted position, the sleeve is creased at all wall portions.

3. A caliper guide assembly according to claim 2, wherein the first wall portion is proximal to one of the sleeve first end and the sleeve second end, wherein the ultimate wall portion is proximal to the other of the sleeve second end and the sleeve first end, and wherein the second wall portion is located between the first wall portion and any further wall portions along the longitudinal axis.

4. A caliper guide assembly according to any one of claims 1 to 3 wherein each wall portion has a relative wall thickness configured to provide higher or lower resistance to creasing upon contraction of the sleeve in relation to the remaining wall portions.

5. A caliper guide assembly according to claim 4, wherein the first wall portion has the lowest relative wall thickness, such that the first wall portion is configured to provide the lowest resistance to creasing upon contraction of the sleeve, and wherein the ultimate wall portion has the highest relative wall thickness, such that the ultimate wall portion is configured to provide the highest resistance to creasing upon contraction of the sleeve.

6. A caliper guide assembly according to claim 5, wherein the sleeve wall thickness gradually increases from the first wall portion to the ultimate wall portion, or wherein the sleeve wall thickness increases incrementally from the first wall portion to the ultimate wall portion.

7. A caliper guide assembly according to any one of claims 1 to 6, wherein the first wall portion is sized to at least partially fit radially within the adjacent wall portion when the sleeve is in a contracted position.

8. A caliper guide assembly according to any of claims 1 to 7 wherein the sleeve is telescopic, such that adjacent wall portions are configured to at least partially fit radially within one another when the sleeve is in a contracted position.

9. A caliper guide assembly according to any one of claims 1 to 8, wherein each wall portion comprises a visual identification feature, preferably wherein the visual identification feature is a percentage correlating to a state of wear of the brake pads, and/or wherein the visual identification feature is a colour.

10. A caliper guide assembly according to any one of claims 1 to 9, wherein the sleeve is resilient, preferably wherein the sleeve is resiliently biased towards the ultimate contracted position.

11. A caliper guide assembly according to any one of claims 1 to 10, wherein the sleeve is of rubber, preferably wherein the sleeve is of silicone rubber.

12. A caliper guide assembly according to any preceding claim, wherein the sleeve is sealingly secured about the periphery of the guide pin, and/or wherein the sleeve is sealingly secured to the caliper so as to seal an open end of the guide bore, preferably wherein the sleeve first end is received within a corresponding groove defined by the guide pin.

13. A heavy vehicle disc brake comprising a caliper guide assembly according to any preceding claim.

14. A sleeve for a caliper guide assembly, the sleeve comprising:
a first end securable to a guide pin, and a second end securable to a caliper; and
at least first and second wall portions at which the sleeve is configured to crease upon contraction of the sleeve along a longitudinal axis thereof;
wherein the sleeve is contractable from an extended position, where the sleeve is not creased at any of the wall portions, to a first contracted position, where the sleeve is creased at the first wall portion, and the sleeve is not creased at the remaining wall portion or portions, and to an ultimate contracted position, where the sleeve is creased at both or all wall portions.

15. A method of production of a sleeve according to any one of claims 1 to 14, the method including the step of:
moulding the sleeve according to any one of claims 1 to 14 in an ultimate contracted position, where the sleeve is creased at both or all wall portions.
